# EUROPEAN PATENT SPECIFICATION

(11) **EP 1 479 911 B1**
(45) Date of publication and mention of the grant of the patent: **23.08.2006**
(21) Application number: 04425370.6
(22) Date of filing: 21.05.2004
(51) Int. Cl.: F04B 49/02, F04B 49/03, E03B 5/02

(54) **Small-size surge tank unit for domestic water systems**
Kleine Druckspeicheranordnung für Trinkwassersystem
Petite unité avec chambre d'équilibrage pour un système domestique d'alimentation en eau

(30) Priority: 23.05.2003 IT FI20030144
(43) Date of publication of application: 24.11.2004
(73) Proprietor: Raddi Enrico, 50050 Signa, Firenze (IT); Raddi Lorenzo, 50058 Signa, Firenze (IT)
(72) Inventor: Raddi Enrico, 50050 Signa, Firenze (IT); Raddi Lorenzo, 50058 Signa, Firenze (IT)
(74) Representative: Mannucci, Michele

(56) References cited:
- EP-A- 0 219 360
- EP-A- 0 539 721
- EP-A- 0 663 553
- EP-A- 0 805 274
- EP-A- 0 915 256
- US-A- 5 941 690

## Description

At present small domestic pressurization systems, for example in single-family dwellings or smaii condominiums, comprise individual separate apparatus including in particular:
- an electric pump, which draws the water from the storage tank and pressurizes the system;
- an expansion tank, also called a hydrosphere or plenum chamber, which is connected to the delivery side of the electric pump and has the function of replenishing the water lost from taps, thus limiting the number of start-ups of the electric pump, damping the vibrations due to the water hammer and keeping the system under pressure;
- a pressure switch which is connected to the outlet (delivery side) of the pump and has the function of detecting the pressure within the system and, on the basis thereof, switching the pump on and off.

In more complex small systems manufactured in accordance with the regulations, the components described above include in addition an electric control console which is connected to the pump, to the pressure switch and to a float device for adjusting the level of the storage tank, and, where applicable, a flow regulator which is also connected to the electric console. The console, in addition to performing switching-on of the pump depending on the user requirement by means of interpretation of the electric signals sent from the float and/or the flow regulator, manages to identify any dry operation and hence rapidly switch off the pump. The pressure switches and the flow regulators may be of the type with an on/off or proportional output signal.

These types of system offer the following advantages: replenishment of small losses (which are present in all systems); possibility of setting the maximum system pressure; having a low cost, when the console with the float and/or flow regulator is not present. On the other hand, except in particular cases such as that described in US patent 4,124,331, a system of this kind, without console and associated accessories, in particular without flow regulator or tank with float, cannot control dry operation and cannot keep the pump constantly switched on, if the demand is such that the system pressure reaches the switch-off point of the pressure switch. In this case - which occurs in 90% of normal operating conditions - the phenomenon of pump surging anses, with continuous starting and stopping of the pump at short time intervals which become shorter with a reduction in the capacity of the expansion tank and deterioration in its condition. Moreover surging results in rapid wear of the membrane inside the pressurized tank and rapid wear of the electrical contacts which operate the pump, as well as the pump itself.

During the last few years electro-hydraulic apparatus - called "pressure flow regulators" - which have characteristics different from those of conventional systems have appeared. These apparatus - owing to the use of a flow regulator, a pressure switch and a small operating console usually formed by an electronic board - are capable of controlling dry operation and keeping the pump running if the demand is greater than a minimum value, have small dimensions and are very low-cost and easy to use and install, compared to systems provided with console and accessories. At the same time, however, they are unable to reduce the maximum pressure developed by the electric pump nor compensate for the losses since they do not have an internal reserve or - if present - it does not exceed 20/30 cl. In the presence of small losses - which is frequently the case - very frequent starting (even every 20-30 seconds) occurs. Control devices of this type are described in French patent 1,476,501 filed on 6/10/61 in the name of Guinard, the corresponding German patent DE 1,291,292 and other patents. The simplicity and ease of installation of these electro-hydraulic apparatus has resulted in the construction of small surge tank units formed by a pump and pressure flow regulator.

A system which is an improvement compared to those indicated above is formed by the pump, by a pressure flow regulator and by an expansion tank mounted hydraulically downstream of the pressure flow regulator. This latter type of system eliminates the drawbacks of the two different solutions described above, while retaining the advantages thereof. A technical drawback arises, however, owing to the fact that it is not possible to reduce the maximum pressure developed by the pump, which will therefore coincide with the maximum system pressure. Moreover, this solution has considerable dimensions, long assembly times and, finally, high costs.

EP 915256 refers to a system of the abovementioned kind, which in particular comprises an electronic board, a flow regulator and a pressure switch.

The present invention solves the problems which are present in the known solutions mentioned above and achieves further objects and advantages which will become obvious from the text which follows.

The invention refers to a small-size surge tank unit, comprising an expansion tank provided with a membrane for the water, said tank unit comprises a small-size apparatus with flange for mounting on a counterflange of the expansion tank with the arrangement, in between, of the annular lip of the membrane that is inside the expansion tank; said apparatus having an inlet for water from the delivery side of a pump and at least one outlet for supplying the water to a user, directly communicating with each other and with the interior of the membrane by means of a third hydraulic opening different from the inlet and the outlet for water, an electronic driver board, at least one flow regulator and a pressure switch; the electronic board is connected to the flow regulator, to the pressure switch and to the pump.

An assembly which allows the formation of small surge tank units having the same performance features as both conventional systems and systems formed with pressure flow regulators is thus created.

Essentially an apparatus is provided, where said apparatus forms an integral and structural part of the expansion tank and without which neither of the two elements, i.e. tank or apparatus, is able to function.

The container of the board regulating the surge tank unit according to the invention may house a device for adjusting the speed of the pump - such as an inverter or a triac - which is dependent upon the pressure switch and flow regulator, so as to vary the pressure supplied by the pump depending on the instantaneous flowrate required by the user, avoiding excessive pressure differences during supply.

The invention will be understood more clearly with reference to the description and attached drawing which illustrates a practical non-limiting example of the said invention. In the drawing:

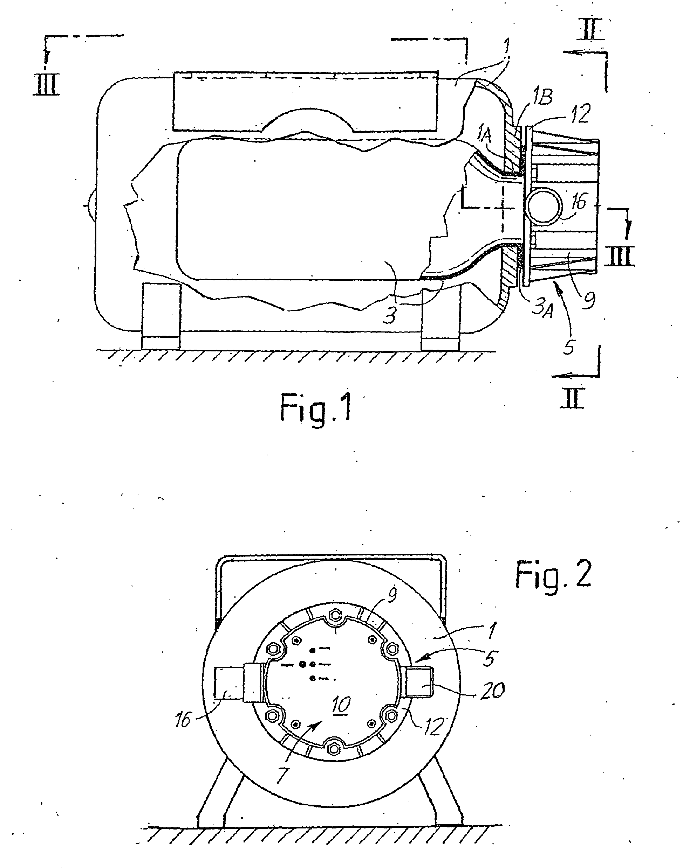

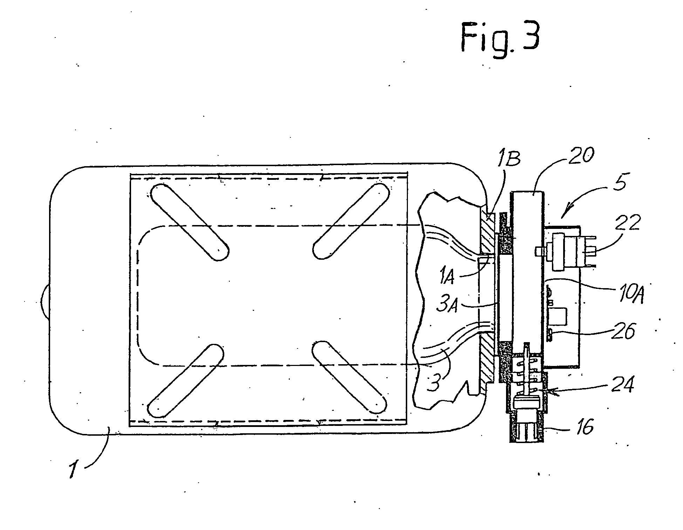

Fig. 1 shows a partially sectioned overall side view and Figs. 2 and 3 views in the directions II-II and III according to Fig. 1;

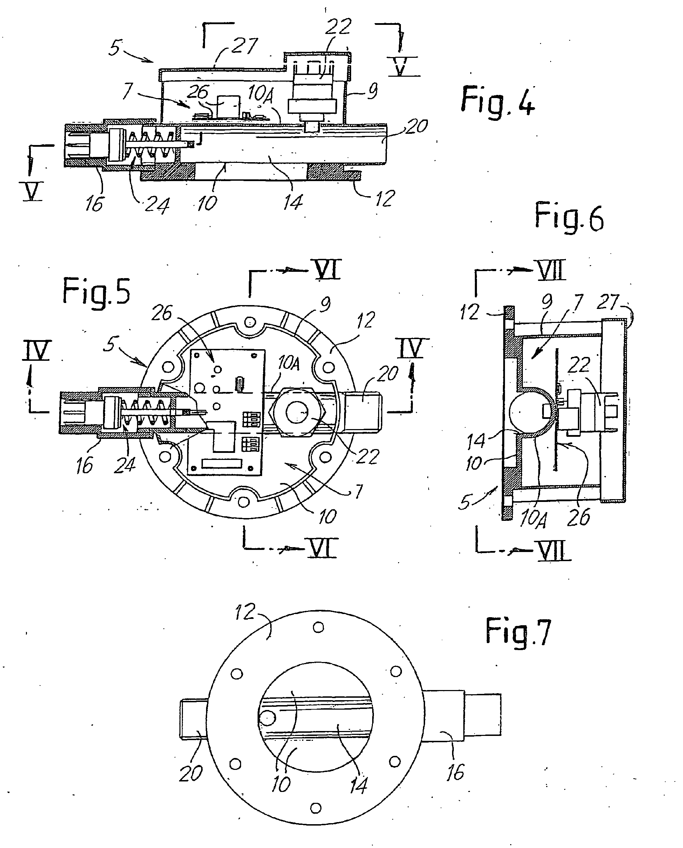

Figs. 4, 5, 6 and 7 show views and cross-sections of the apparatus in the directions IV-IV, V-V, VI-VI and VII-VII; and

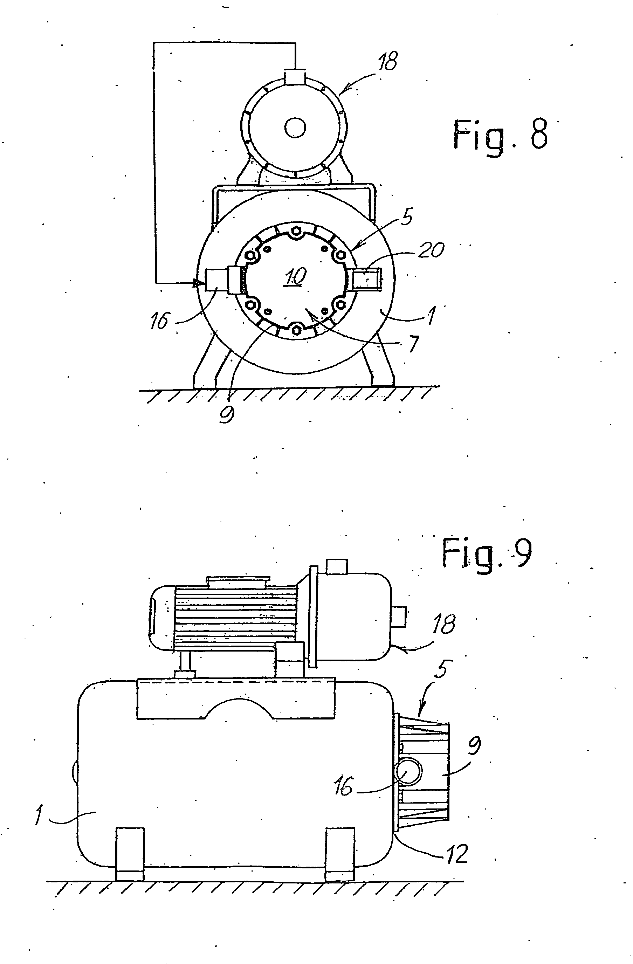

Figs. 8 and 9 show front and side elevation views, respectively, of a surge tank unit complete with pump and equipped with a control device according to the invention.

1 denotes an expansion tank, with an opening 1A equipped with a perimetral counterflange 1B; 3 denotes the membrane separating the space occupied by the air and the volume inside the membrane which communicates with the water flow path. The apparatus generally denoted by 5 and forming the subject of the invention is applied to the expansion tank 1, 3 thus formed. The opening 14 may also be formed with a thread which is male or female or also comprising a rotating connection.

Said apparatus comprises a container 7 defined by a perimetral wall 9, by a base 10 and by a perimetrally projecting flange 12 for mounting on the counterflange 1B; said flange 12 and the counterflange1B retain between them in a sealing manner the lip 3A of the opening of the membrane 3, to which an opening 14 in the base 10 corresponds. 16 denotes the inlet for the water supplied by a delivery pump 18 and 20 an outlet for supplying the water to the user. The base 10 has a diametral relief 10A extending between the two connections 16 and 20 and corresponding to the opening 14. Several outlets which are inclined with respect to each other may also be envisaged.

22 denotes a pressure switch, which is positioned between the container 7 and the space between the two connections 16 and 20, for detecting the value of the pressure existing on the pump delivery side. 24 denotes a flow regulator, which may be positioned at the inlet 16 or at the outlet 20 or at each outlet. 26 represents an electronic board which is housed inside the container 7. 27 denotes a cover for the container 7.

The apparatus described hereinabove is assembled with the expansion tank 1 by means of the counterflange 1 B which is joined to the flange 12 which normally replaces that present in the expansion tank. The opening 14 acts as an inlet into and from the membrane 3 for the water contained inside said membrane. The electronic board 26 will be provided with signalling LEDs and any control devices. The electronic board 26 will be equipped with an input for the power supply and with an output for operation of the electric pump and will be designed to receive signals from the pressure switch 22 and from the flow regulator 24.

The assembly described above, with the appropriate cover 27 for the container 7, is bolted onto the counterflange 1B of the expansion tank 1, 3. The membrane 3 remains locked between the counterflange 1B and the flange 12 so as to separate the air cushion of the tank 1 from the water which enters the membrane 3. The ideal volume of the expansion tank, defined by the components 1, 3, may be in the region of about 20 liters and in any case depends on the use for which the assembly is intended.

After the assembly has been assembled together, the installation engineer mounts the pump 18, for example on top of the tank 1, and performs the electrical and hydraulic connection thereof. The apparatus will thus be ready to operate in a completely autonomous manner the electric pump and the entire water system of the user.

When a user facility is opened, the membrane 3 - pushed by the air cushion contained inside the tank 1 - will supply water without actuating the pump, which will start only when the expansion tank has been emptied and the system pressure has reached the minimum value set on the pressure switch 22. If the demand for water continues, the electronic board 26 will start the pump 18. The water enters via the inlet 6 and the opening 14, partly filling again the membrane 3 and partly directly supplying the user via the output(s) 20. The pump will be kept switched on irrespective of the system pressure, even if the latter is greater than the switch-off pressure of the pressure switch, for as long as the flowrate remains higher than the sensitivity of the flow regulator.

When the user facility is closed, the pump will remain running for a predetermined period of time and in any case until the system is pressurized, with the pressure of the tank 1 being fully restored.

In the event of leakages these will be compensated for by the reserve accumulated inside the membrane 3 and switching-on of the pump wiii occur for a short period only when the reserve has been used up.

In the event of a low level of intake water, the flow regulator 24 will indicate the lack of flow and the pressure switch 22 will signal the lack of pressure such that the electronic board 26 will stop the pump and switch on the alarm lamp. Resetting will occur automatically when water reaches a pressure higher than the switch-on pressure of the pressure switch. Alternatively the system may be started up again by pressing a reset button.

Compared to systems with the pressure flow regulator only, with the system described, in the event of small demands or more frequently leakages, the number of start-ups are reduced from one every 20/30 seconds to one every three hours. This results in a drastic increase in the life of both the relay operating the pump 18 and the membrane 3 of the expansion tank 1, 3. Moreover, with a reduction in the number of start-ups there is a considerable reduction in the energy consumption.

Since a given time is required to fill and pressurize the expansion tank, if the board is provided with the possibility of regulating the delayed switch-off time of the pump, the latter could be stopped before reaching the maximum pressure attainable by the pump, thus controlling the maximum system pressure.

The flow regulator may be positioned at the inlet 16 as shown in the drawing or at the outlet 20. In this case the pump 18 may be switched on even if the pressure has not dropped to the switch-on value of the pressure switch. It is sufficient in fact for the water to manage to displace the flow regulator by an amount sufficient to trip the electric contact. Two flow regulators may also be envisaged, one at the inlet and one at the outlet, so as to ensure more rapid operation and avoid drawbacks resulting from incorrect calibration of a pressure switch.

As a variation to that shown, the flange 12 may have the hydraulic connection 14, with the plenum chamber 1 and the membrane 3 designed with a male or female or rotating thread - instead of with the opening 14 shown in the figure - for the connection thereto of a hydrosphere with a female or male or rotating outlet, designed to contain the seal, for suitable connection to the system.

The flow regulator 24 may also have the function of an end valve (in order to prevent emptying of the delivery side) or an end valve separate from the flow regulator may be envisaged at the inlet 16 or at the outlet 20.

The electronic board may incorporate a device for regulating the pump stop time, for more complete automation, as mentioned above.

It is understood that the drawing shows only one example provided by way of a practical demonstration of the invention, whereby said invention may be subject to a variation in the forms and arrangement thereof, without however departing from the scope of the invention, which is defined by the claims. The presence of any reference numbers in the claims with reference to the description and the drawing does not limit the scope of protection represented by the claims.

## Claims

1. A small-size surge tank unit, comprising an expansion tank (1) provided with a membrane (3) for the water, **characterized in that** it comprises a small-size apparatus (5) with flange (12) for mounting on a counterflange (1 B) of the expansion tank (1) with the arrangement, in between, of the annular lip (3A) of the membrane (3) that is inside the expansion tank (1); said apparatus having an inlet (16) for water from the delivery side of a pump (18) and at least one outlet (20) for supplying the water to a user, directly communicating with each other and with the interior of the membrane (3) by means of a third hydraulic opening (14) separate from said inlet (16) and outlet (20), an electronic driver board (26), at least one flow regulator (24) and a pressure switch (22); the electronic board (26) being connected to the flow regulator, to the pressure switch and to the pump.

2. Surge tank unit according to Claim 1, **characterized in that** said inlet (16) and said outlet (20) are aligned with a diametral intermediate projection (10A) of the base (10) of the container (7), and **in that** the opening (14) for communication with the membrane (3) corresponds to the said projection (10A).

3. Surge tank unit according at least to Claim 1, **characterized in that** it comprises two flow regulators, one at the inlet and one at the outlet.

4. Surge tank unit according to Claim 1, **characterized in that** the pressure switch is analog and/or digital and/or directly combined with the electronic board.

5. Surge tank unit according to Claim 1, **characterized in that** the flow regulator is analog and/or digital and/or directly combined with the electronic board.

6. Surge tank unit according at least to Claim 1, **characterized in that** the electronic board comprises an adjustable timer able to allow adjustment of the delay time for stoppage of the pump.

7. Surge tank unit according to at least one of the preceding claims, **characterized in that** it comprises at least two user outlets, said outlets being angled with respect to each other.

8. Surge tank unit according to one or more of the preceding claims, **characterized in that** the apparatus (5) houses a device for adjusting the speed of the pump - such as an inverter or a triac - dependent upon the pressure switch (22) and the flow regulator (24), in order to vary the pressure supplied by the pump depending on the instantaneous flowrate required by the user.

9. Surge tank unit according to one or more of the preced ing claims, **characterized in that** the pressure switch and/or flow regulator are able to transmit an electric signal of the ON/OFF type or proportional to the parameter measured.

10. Surge tank unit according to one or more of the preceding claims, **characterized in that** the pressure switch and/or flow regulator are formed at least partly in the structure of said apparatus (5).

## Patentansprüche

1. Ausgleichsbehältereinheit mit kleinen Abmessungen, umfassend ein Expansionsgefäß (1) mit einer Membran (3) für das Wasser, **dadurch gekennzeichnet, dass** sie eine Vorrichtung (5) von kleinen Abmessungen mit einem Flansch (12) zum Befestigen an einem Gegenflansch (1B) des Expansionsgefäßes (1) aufweist, wobei dazwischen die ringförmige Lippe (3A) der Membran (3), die sich in dem Expansionsgefäß (1) befmdet, angeordnet wird; wobei die Vorrichtung einen Einlass (16) für Wasser von der Lieferseite einer Pumpe (18) und mindestens einen Auslass (20) für die Zuführung des Wassers zu einem Benutzer aufweist, die direkt miteinander und mit dem Inneren der Membran (9) mittels einer dritten Wasseröffnung (14) kommunizieren, die von dem Einlass (16) und Auslass (20) getrennt ist, eine elektronische Steuerkarte (26), mindestens einen Strömungsregler (24) und einen Druckschalter (22), wobei die elektronische Karte (26) mit dem Strömungsregler, dem Druckschalter und der Pumpe verbunden ist.

2. Ausgleichsbehältereinheit gemäß Anspruch 1, **dadurch gekennzeichnet, dass** der Einlass (16) und der Auslass (20) mit einem diametralen Verbindungsvorsprung (10A) der Basis (10) des Behälters (7) ausgerichtet sind und dass die Öffnung (14) für die Verbindung mit der Membran (3) dem Vorsprung (10A) entspricht.

3. Ausgleichsbehältereinheit gemäß mindestens Anspruch 1, **dadurch gekennzeichnet, dass** sie zwei Strömungsregler aufweist, einen am Einlass und einen am Auslass.

4. Ausgleichsbehältereinheit gemäß Anspruch 1, **dadurch gekennzeichnet, dass** der Druckschalter analog und/oder digital und/oder direkt mit der Elektronikkarte kombiniert ist.

5. Ausgleichsbehältereinheit gemäß Anspruch 1, **dadurch gekennzeichnet, dass** der Strömungsregler analog und/oder digital und/oder direkt mit der Elektronikkarte verbunden ist.

6. Ausgleichsbehältereinheit gemäß mindestens Anspruch 1, **dadurch gekennzeichnet, dass** die Elektronikkarte einen einstellbaren Zeitgeber aufweist, um eine Einstellung der Verzögerungszeit für das Stoppen der Pumpe zu ermöglichen.

7. Ausgleichsbehältereinheit gemäß mindestens einem der vorangehenden Ansprüche, **dadurch gekennzeichnet, dass** sie mindestens zwei Benutzerauslässe aufweist, die im Winkel zueinander angeordnet sind.

8. Ausgleichsbehältereinheit gemäß einem oder mehreren der vorangehenden Ansprüche, **dadurch gekennzeichnet, dass** die Vorrichtung (5) eine Einrichtung zum Einstellen der Geschwindigkeit der Pumpe - wie zum Beispiel einen Inverter oder ein Triac - in Abhängigkeit von dem Druckschalter (22) und dem Strömungsregler (24) enthält, um den von der Pumpe gelieferten Druck in Abhängigkeit von der vom Benutzer benötigten momentanen Strömungsgeschwindigkeit zu variieren.

9. Ausgleichsbehältereinheit gemäß einem oder mehreren der vorangehenden Ansprüche, **dadurch gekennzeichnet, dass** der Druckschalter und/oder der Strömungsregler in der Lage sind, ein elektrisches Signal vom EIN/AUS-Typ oder proportional zu dem gemessenen Parameter abzugeben.

10. Ausgleichsbehältereinheit nach einem oder mehreren der vorangehenden Ansprüche, **dadurch gekennzeichnet, dass** der Druckschalter und/oder der Strömungsregler mindestens teilweise in der Struktur der Vorrichtung (5) ausgebildet sind.

## Revendications

1. Ballon d'expansion de petite dimension comprenant un réservoir d'expansion (1) muni d'une membrane (3) pour l'eau, **caractérisé en ce qu'**il comprend un dispositif de petite dimension (5) avec un rebord (12) pour le montage sur un contre-rebord (1B) du réservoir d'expansion (1) avec l'agencement entre eux de la lèvre annulaire (3A) de la membrane (3) qui est à l'intérieur du réservoir d'expansion (1), ledit dispositif ayant une entrée (16) pour l'eau sur le côté de fourniture d'une pompe (18) et au moins une sortie (20) pour amener l'eau à un utilisateur, et communiquant directement l'une avec l'autre et avec l'intérieur de la membrane (3) au moyen d'une troisième ouverture hydraulique (14) séparée de ladite entrée (16) et de ladite sortie (20), un dispositif électronique de commande (26), au moins un régulateur d'écoulement (24) et un commutateur de pression (22), le dispositif électronique (26) étant relié au régulateur d'écoulement, au commutateur de pression et à la pompe.

2. Ballon d'expansion selon la revendication 1, **caractérisé en ce que** ladite entrée (16) et ladite sortie (20) sont alignées avec une partie saillante intermédiaire diamétrale (10A) de la base (10) du récipient (7) et **en ce que** l'ouverture (14) pour la communication avec la membrane (3) correspond à ladite partie saillante (10A).

3. Ballon d'expansion selon au moins la revendication 1, **caractérisé en ce qu'**il comprend deux régulateurs d'écoulement, un à l'entrée et un à la sortie.

4. Ballon d'expansion selon la revendication 1, **caractérisé en ce que** le commutateur de pression est analogique et/ou numérique et/ou directement combiné au dispositif électronique.

5. Ballon d'expansion selon la revendication 1, **caractérisé en ce que** le régulateur d'écoulement est analogique et/ou numérique et/ou directement combiné au dispositif électronique.

6. Ballon d'expansion selon au moins la revendication 1, **caractérisé en ce que** le dispositif électronique comprend une minuterie réglable capable de permettre un ajustement du temps de retard pour l'arrêt de la pompe.

7. Ballon d'expansion selon au moins une quelconque des revendications précédentes, **caractérisé en ce qu'**il comprend au moins deux sorties d'utilisateur, lesdites sorties faisant un angle l'une par rapport à l'autre.

8. Ballon d'expansion selon une ou plusieurs des revendications précédentes, **caractérisé en ce que** le dispositif (5) loge un dispositif pour ajuster la vitesse de la pompe, comme un inverseur ou un triac, en fonction du commutateur de pression (22) et du régulateur d'écoulement (24) afin de faire varier la pression fournie par la pompe en fonction du débit instantané requis par l'utilisateur.

9. Ballon d'expansion selon une ou plusieurs des revendications précédentes, **caractérisé en ce que** le commutateur de pression et/ou le régulateur d'écoulement sont capables de transmettre un signal électrique du type MARCHE/ARRET ou proportionnel au paramètre mesuré.

10. Ballon d'expansion selon une ou plusieurs des revendications précédentes, **caractérisé en ce que** le commutateur de pression et/ou le régulateur d'écoulement sont formés au moins partiellement dans la structure dudit dispositif (5).
